# EUROPÄISCHE PATENTSCHRIFT

(11) **EP 1 553 271 B1**
(45) Veröffentlichungstag und Bekanntmachung des Hinweises auf die Patenterteilung: **07.05.2008**
(21) Anmeldenummer: 05008020.9
(22) Anmeldetag: 10.07.2004
(51) Int. Cl.: F01N 3/20, F01N 3/28, F01N 7/02, F01N 1/10, B60K 15/067, B60K 15/063, B01D 53/90

(54) **Kraftfahrzeug mit spezieller Anordnung eines Kraftstofftanks und Reduktionsmitteltanks**
Vehicle with a special arrangement of a fuel tank and a reduction agent tank
Véhicule avec un agencement particulier d'un réservoir de carburant et d'un réservoir pour agent réducteur

(30) Priorität: 01.08.2003 DE 10335265
(43) Veröffentlichungstag der Anmeldung: 13.07.2005
(62) Teilanmeldung aus: 04016280.2
(73) Patentinhaber: MAN Nutzfahrzeuge Aktiengesellschaft, 80995 München (DE)
(72) Erfinder: Stiermann, Ervin, Dipl.-Ing. (FH), 86356 Neusäss (DE)

(56) Entgegenhaltungen:
- EP-A- 1 350 654
- EP-A1- 1 260 682
- DE-A1- 10 063 569
- DE-A1- 10 214 556
- DE-A1- 19 729 003

## Beschreibung

Die Erfindung betrifft ein Kraftfahrzeug, insbesondere Lastkraftwagen, mit Merkmalen der im Oberbegriff des Anspruchs 1 angegebenen Art.

Bei Kraftfahrzeugen der gattungsgemäßen Art besteht das größte Problem darin, einen Schalldämpfer, gegebenenfalls auch Vorschalldämpfer, die Katalysatoren, den Kraftstofftank und den HWL-Tank in den ohnehin beengten Raumverhältnissen unterzubringen.

Was den Kraftstofftank und HWL-Tank anbelangt, so ist es z. B. aus der DE 19729003 A1, die den Oberbegriff des Anspruchs 1 bildet, bekannt, diese beiden Tanks zu einer Baueinheit zusammenzufassen. In einem Beispiel sind dabei der Kraftstofftank und der HWL-Tank in einem gemeinsamen Gehäuse durch eine Wand voneinander getrennt.

Es ist demgegenüber Aufgabe der Erfindung, bei einem Kraftfahrzeug mit den gattungsgemäßen Merkmalen für den Kraftstofftank und den HWL-Tank eine praxistaugliche und platzsparend am Fahrzeug unterbringbare sowie einfach und preisgünstig realisierbare Lösung bereitzustellen.

Diese Aufgabe ist bei einem Kraftfahrzeug der gattungsgemäßen Art erfindungsgemäß durch die im Kennzeichen des Anspruchs 1 angegebene Bauart gelöst.

Vorteilhafte Ausgestaltungen dieser Lösung sind in den Unteransprüchen angegeben.

Erfindungsgemäß schließt sich der HWL-Tank an einer Stirnseite des Kraftstofftanks mit einem zunächst topfförmigen, nach vorne hin offenen HWL-Tank-Gehäuse an, in das ein vorgefertigter HWL-Tank-Innenkörper von vorne her einbaubar ist und das anschließend durch eine Frontwand verschließbar ist. Eine aus dem fertigen HWL-Tank und wenigstens dem Kraftstofftank zusammengefasste, komplett vormontierte Baueinheit kann am Fahrgestell-Rahmen anstelle eines Kraftstofftanks, z. B. eines großen mit 900 Liter Fassungsvermögen, angebaut werden, dessen Volumen oder Länge etwa jener/jenem der besagten Baueinheit entspricht, wobei der innerhalb dieser Baueinheit gegebene Kraftstofftank ein gegenüber dem ersetzten Kraftstofftank kleineres, aber doch noch ausreichendes Tankvolumen aufweist. Im dadurch gewonnenen Bauraum ist der HWL-Tank, gegebenenfalls auch ein Vorschalldämpfer untergebracht. Dies macht zwar ein öfteres Kraftstoffnachtanken erforderlich, dafür sind aber der HWL-Tank und der Kraftstofftank in platzsparendster und handhabungsgünstigster Weise im Kraftfahrzeug untergebracht. Auch das Nachtanken des HWL-Tanks ist bei der erfindungsgemäßen Anordnung in einfachster Weise möglich. Andererseits kann das in der besagten Baueinheit fehlende Kraftstofftankvolumen durch einen Zusatztank realisiert werden, der z. B. auf der gegenüberliegenden Rahmenseite oder zwischen den Rahmen-Längsträgern unterbringbar ist.

Nachstehend ist die erfindungsgemäße Lösung anhand der Zeichnung noch näher erläutert. In der Zeichnung zeigen:
- Fig. 1: schematisiert einen Längsschnitt durch ein erstes Ausführungsbeispiel der Erfindung,
- Fig. 2: das erste Ausführungsbeispiel der Erfindung in Draufsicht angebaut am Fahrgestell-Rahmen eines Lastkraftwagens, und
- Fig. 3: schematisiert einen Längsschnitt durch ein zweites Ausführungsbeispiel der Erfindung.

In der Zeichnung sind gleiche bzw. einander entsprechende Teile mit gleichen Bezugszeichen angegeben.

Die Erfindung bezieht sich auf ein Kraftfahrzeug, insbesondere Lastkraftwagen, mit einer Brennkraftmaschine, insbesondere Dieselmotor, die aus einem Kraftstofftank 1 mit Kraftstoff versorgbar ist. Bei den dargestellten Beispielen sind im Abgasstrang 2 der Brennkraftmaschine ein Vorschalldämpfer 3 und ein Hauptschalldämpfer (nicht dargestellt) angeordnet. Der Vorschalldämpfer 3 ist dabei auf der einen Seite und der Hauptschalldämpfer auf der anderen Seite des Fahrgestell-Rahmens angeordnet und stehen über einen Abschnitt 2/2 der Abgasleitung 2 miteinander in Verbindung. In den Vorschalldämpfer 3 sind ein Hydrolysekatalysator 4 und eventuell wenigstens noch ein Oxidationskatalysator 5 eingebaut. Letztere(r) dient/dienen dazu, den NO₂-Anteil im Abgas signifikant zu erhöhen. Der Hydrolysekatalysator 4 ist mittels einer Dosiereinrichtung 6 über eine Dosierleitung 7 mit Sprühkopf 8 am freien Ende mit einer Harnstoff-Wasser-Lösung (HWL) beaufschlagbar, die in einem eigenen HWL-Tank 9 bevorratbar ist. Den Vorschalldämpfer 3 verlässt demnach ein mit Ammoniak und hohem NO₂-Anteil dosiertes Abgas, das mittels im Hauptschalldämpfer angeordneter SCR-Katalysatoren in optimaler Weise reinigbar ist.

Erfindungsgemäß schließt sich der HWL-Tank 9 an einer Stirnseite des Kraftstofftanks 1 mit einem zunächst topfförmigen, nach vorne hin offenen HWL-Tank-Gehäuse 25 an, in das ein vorgefertigter HWL-Tank-Innenkörper 26 von vorne her einbaubar ist und das anschließend durch eine Frontwand 27 verschließbar ist. Dabei bildet der vorgefertigte HWL-Tank 9 mit wenigstens dem Kraftstofftank 1 eine kompakte Baueinheit 10, die in ihrer Gesamtheit am Fahrgestell-Rahmen des Fahrzeugs, dort einem der beiden Rahmen-Längsträger 11 befestigbar ist. Der HWL-Tank 9 und der Kraftstofftank 1 sind in Reihe hintereinander angeordnet. In den dargestellten Beispielen schließt sich vorne an den HWL-Tank 9 der Vorschalldämpfer 3 an, so dass der HWL-Tank 9 zwischen Vorschalldämpfer 3 und Kraftstofftank angeordnet ist. Vorzugsweise wird die aus dem Kraftstofftank 1 und HWL-Tank 9 bestehende und gegebenenfalls durch den Vorschalldämpfer 3 ergänzte Baueinheit 10 komplett vormontiert am Fahrgestellrahmen 11 anstelle eines Kraftstofftanks angebaut, dessen Baulänge oder Volumen etwa jener bzw. jenem der Baueinheit 10 entspricht. Dabei weist der innerhalb der Baueinheit 10 gegebene Kraftstofftank 1 gegenüber dem ersetzten Kraftstofftank bei gleichem Querschnitt ein z. B. um 30 bis 40 % kleineres Tankvolumen auf. Dieser solchermaßen gewonnene Bauraum teilt sich teils, beispielsweise zu etwa 1/3 auf den HWL-Tank 9 und teils, beispielsweise zu etwa 2/3 auf den Vorschalldämpfer 3 auf. Es können sich fallweise aber auch andere als vorgenannte Aufteilungen als praktikabel bzw. notwendig erweisen.

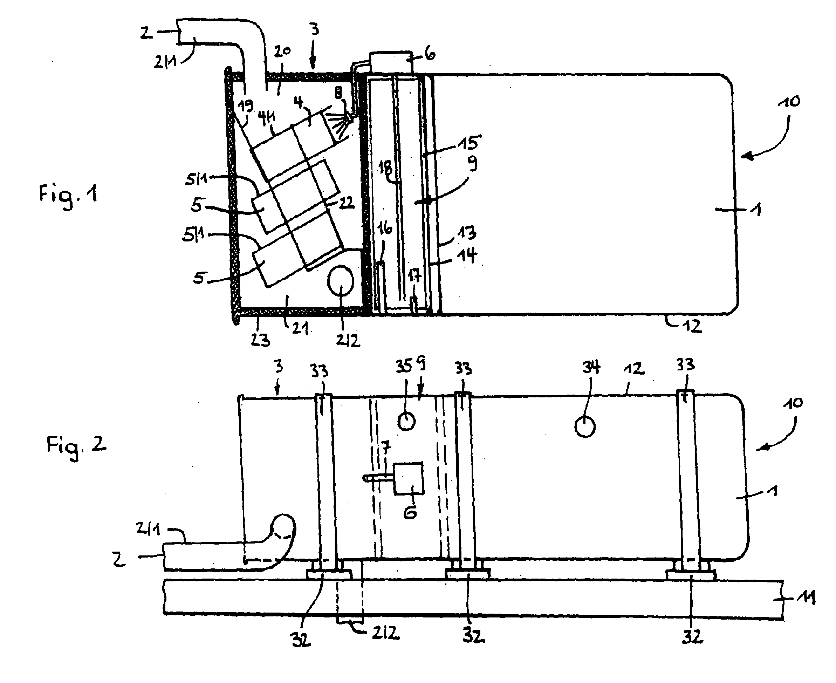

In Beispiel gemäß Fig. 1 ist der Kraftstofftank 1 innerhalb eines Gehäuses 12 durch eine Doppelwand 13, 14 vom HWL-Tank 9 getrennt, so dass bei etwaigen HWL-Leckagen diese nicht in den Kraftstofftank 1 gelangen können. Der HWL-Tank 9 weist innen generell eine thermisch isolierende Auskleidung 15 sowie eine in ihn eingebaute Heizeinrichtung 16, die ein Einfrieren der HWL verhindert, und einen in ihn eingebauten Füllstandsensor 17 auf. Die HWL-Dosiereinrichtung 6 ist im Bereich des HWL-Tanks 9, dort vorzugsweise oben angebaut, angeordnet. Von dieser HWL-Dosiereinrichtung 6 ragt ein vertikales HWL-Saugrohr 18 in den HWL-Tank 9 hinein und reicht dort bis nahe zu dessen Boden hinunter. Außerdem geht von dieser Dosiereinrichtung 6 seitlich die HWL-Dosierleitung 7 ab, die in den Innenraum des Vorschalldämpfers 3 hineingeführt ist und dort im Eingangsbereich des Hydrolysekatalysators 4 bzw. dessen Gehäuses 4/1 mit ihrem Sprühkopf 8 endet.

Der Innenraum des Vorschalldämpfers 3 ist in den dargestellten Beispielen durch eine Zwischenwand 19 in eine Einströmkammer 20 und eine Ausströmkammer 21 unterteilt, wobei die Einströmkammer 20 mit einem von der Brennkraftmaschine bzw. deren Aufladeaggregat kommenden Abschnitt 2/1 der Abgasleitung 2 und die Ausströmkammer 21 mit einem die Verbindung zum Hauptschalldämpfer herstellenden Abschnitt 2/2 der Abgasleitung 2 kommuniziert. Die Katalysatoren 4, 5 sind im Vorschalldämpfer 3 achsparallel zueinander und nebeneinander angeordnet und dort mit ihren Gehäusen 4/1 bzw. 5/1 in der Zwischenwand 19 sowie einer beabstandet an dieser angeordneten Haltewand 22 befestigt. Die gezeigte Schrägstellung der Katalysatoren 4, 5 ist eine mögliche Einbauart. Wenn es der Bauraum des Vorschalldämpfers 3 und die Größe der Katalysatoren 4, 5 zulassen, sind letztere auch anders, z. B. vertikal stehend parallel zueinander und nebeneinander in den Vorschalldämpfer 3 einbaubar.

Der Vorschalldämpfer 3 ist innen mit einer Schicht 23 aus schalldämmenden Material ausgekleidet und zum HWL-Tank 9 hin noch zusätzlich thermisch isoliert, um eine zu starke Wärmeübertragung von dem den Vorschalldämpfer 3 durchströmenden Abgas zum HWL-Tank 9 hin zu vermeiden.

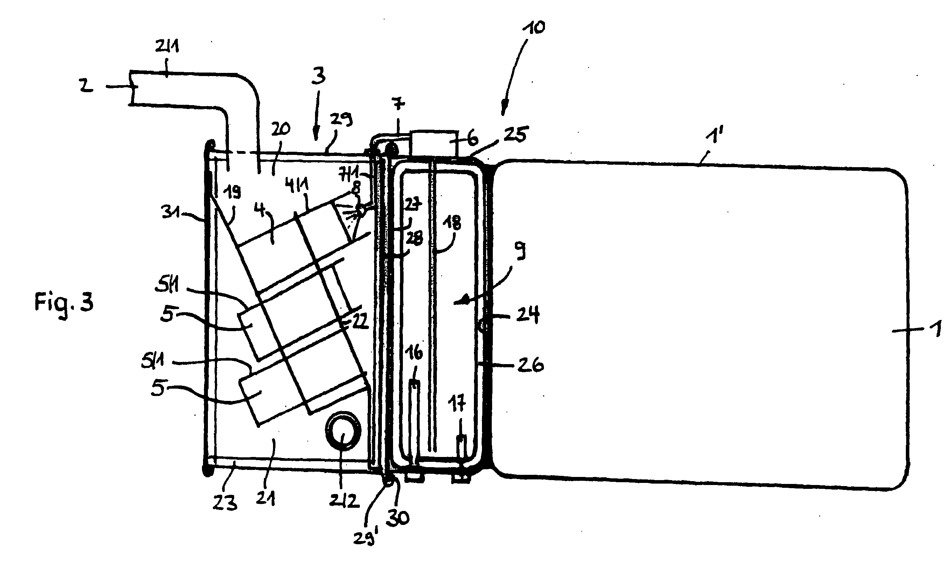

Beim Ausführungsbeispiel gemäß Fig. 3 ist der Kraftstofftank 1 durch einen vorgefertigten Behälter aus Stahl oder Aluminium oder aluminiertem Stahlblech mit allseitig geschlossener Behälterwand 1' gebildet. An der vorderen Stirnwand 24 dieses Kraftstofftanks 1 wird ein topfförmiges, nach vorne zum Vorschalldämpfer 3 hin zunächst offenes HWL-Tank-Gehäuse 25 angeschlossen, vorzugsweise angeschweißt. In dieses wird dann ein in sich geschlossener, aus einem dickwandigen Isolationsmaterial vorgefertigter HWL-Tank-Innenkörper 26 von vorne her eingebaut. Das HWL-Tank-Gehäuse 25 ist anschließend durch eine HWL-Tank-Frontwand 27 verschließbar. Diese bildet bei diesem Beispiel gleichzeitig eine Zwischenwand zwischen HWL-Tank 9 und Vorschalldämpfer 3 und ist auf ihrer dem Innenraum des Vorschalldämpfers 3 zugewandten Seite mit einer Schicht 28 aus thermisch isolierendem Material beschichtet. An diese HWL-Tank-Frontwand 27 schließt sich eine zylindrische Umfangsaußenwand 29 des Vorschalldämpfers 3 an. Die mechanische Verbindung erfolgt z. B. durch Umbördelung der Umfangsaußenwand 29 im Bereich der HWL-Tank-Frontwand 27 einschließlich des ebenen vorderen Randes 30 am HWL-Tank-Gehäuse 25, an den sich die HWL-Tank-Frontwand 27 abstützt. Stirnseitig an der Umfangsaußenwand 29 schließt sich die vordere Stirnwand 31 des Vorschalldämpfers 3 an und ist mit letzterer z. B. durch randseitige Umbördelung verbindbar.

Innerhalb des Ausführungsbeispiels gemäß Fig. 3 bilden die Zwischenwand 19, die Haltewand 22 und die in ihren Gehäusen 4/1, 5/1 aufgenommenen Katalysatoren 4, 5 eine vorzufertigende Baugruppe, an deren Zwischenwand 19 anschließend die vordere Stirnwand 31 durch Anschweißen befestigbar ist. Danach werden an der vorderen Stirnwand 31 die Schicht 23 aus Isoliermaterial und dann die Umfangsaußenwand 29 angebracht, letztere z. B. durch randseitige Umbördelung. Anschließend wird die Zwischenwand 19 mit der Umfangsaußenwand 29 durch Schweißen verbunden. Die Umfangsaußenwand 29 ist vorher ebenfalls mit der Isoliermaterialschicht 23 belegt worden, zumindest in den Bereichen, die nach dem Anschweißen der Zwischenwand 19 nicht mehr zugänglich sind. Im nächsten Arbeitsgang wird ein Dosierleitungsstück 7/1 in eine Öffnung in der Umfangsaußenwand 29 eingesetzt und dort befestigt. Zuletzt wird diese solchermaßen vorgefertigte Vorschalldämpfer-Baugruppe zusammen mit der schon mit Thermoisolierschicht 28 und Schalldämmungsmaterial 23 beschichteten HWL-Tank-Frontwand 27 am vorderen Rand 30 des HWL-Tank-Gehäuses 25 angesetzt und zuletzt durch randseitige Umbördelung der Umfangsaußenwand 29 am HWL-Tank-Gehäuse 25 befestigt. Dann kann die Dosiereinrichtung 6 und das Leitungsverbindungsstück der Dosierleitung zum Teilstück 7/1 montiert werden.

Es versteht sich von selbst, dass im Rahmen des allgemeinen Erfindungsgedankens jederzeit auch andere als vorbeschriebene und in der Zeichnung dargestellte Ausführungs- und Realisierungsformen der Baueinheit 10 möglich sind.

Eine vorgefertigte und vormontierte Baueinheit 10 wird bei ihrer Endmontage am Rahmen, dort einem Rahmen-Längsträger 11 des Fahrzeugs z. B. an rahmenfesten Konsolen 32 angesetzt und dort durch Bänder, Bügel oder dergleichen Organe 33 befestigt.

Im Betrieb ist der Kraftstofftank 1 über einen durch einen Tankdeckel 34 verschließbaren Einfüllstutzen mit Kraftstoff und der HWL-Tank 9 über einen relativ weit davon entfernten, durch einen Tankdeckel 35 verschließbaren Einfüllstutzen mit HWL befüllbar.

## Patentansprüche

1. Kraftfahrzeug, insbesondere Lastkraftwagen, mit einer Brennkraftmaschine, die aus einem Kraftstofftank (1) mit Kraftstoff versorgbar ist und in deren Abgasstrang (2) ein Hydrolysekatalysator (4), wenigstens ein weiterer Katalysator (5) und wenigstens ein Schalldämpfer (3) angeordnet sind, wobei der Hydrolysekatalysator (4) mittels einer Dosiereinrichtung (6, 7) mit einer in einem HWL-Tank (9) bevorrateten Harnstoff-Wasser-Lösung (HWL) beaufschlagbar ist, **dadurch gekennzeichnet, dass** sich der HWL-Tank (9) an einer Stirnseite des Kraftstofftanks (1) mit einem zunächst topfförmigen, nach vorne hin offenen HWL-Tank-Gehäuse (25) anschließt, in das ein vorgefertigter HWL-Tank-Innenkörper (26) von vorne her einbaubar ist und das anschließend durch eine Frontwand (27) verschließbar ist.

2. Kraftfahrzeug nach Anspruch 1, **dadurch gekennzeichnet, dass** eine kompakte, wenigstens aus dem Kraftstofftank (1) und dem fertigen HWL-Tank (9) bestehende, komplett vormontierte Baueinheit (10) am Fahrgestell-Rahmen (11) anstelle eines Kraftstofftanks anbaubar ist, dessen Baulänge oder Volumen etwa jener bzw. jenem der Baueinheit (10) entspricht, wobei innerhalb der Baueinheit (10) der Kraftstofftank (1) gegenüber dem ersetzten Kraftstofftank bei gleichem Querschnitt ein kleineres Tankvolumen aufweist, in welchem solchermaßen gewonnenen Bauraum der HWL-Tank (9) angeordnet ist.

3. Kraftfahrzeug nach Anspruch 1, **dadurch gekennzeichnet, dass** der HWL-Tank (9) - in Fahrtrichtung vorwärts gesehen - in Reihe mit und vor dem Kraftstofftank (1) angeordnet ist.

4. Kraftfahrzeug nach Anspruch 1, **dadurch gekennzeichnet, dass** zwischen Kraftstofftank (1) und HWL-Tank (9) eine Doppelwand angeordnet ist, die bei etwaigen Tankleckagen das Vordringen des Leckagemediums in den anderen Tankbereich verhindert.

5. Kraftfahrzeug nach Anspruch 1, **gekennzeichnet durch** einen aus einem dickwandigen Isolationsmaterial vorgefertigten HWL-Tank-Innenkörper (26).

6. Kraftfahrzeug nach Anspruch 1, **dadurch gekennzeichnet, dass** nach Einbau des HWL-Tank-Innenkörpers (26) in das HWL-Tank-Gehäuse (25) an dessen vorderem Rand die HWL-Tank-Frontwand (27) ansetzbar und durch randseitige Umbördelung der Umfangsaußenwand (29) am HWL-Tank-Gehäuse (25) befestigbar ist.

7. Kraftfahrzeug nach Anspruch 1, **dadurch gekennzeichnet, dass** der HWL-Tank (9) eine ihn thermisch isolierende Auskleidung (15) aufweist.

8. Kraftfahrzeug nach Anspruch 1, **dadurch gekennzeichnet, dass** in den HWL-Tank (9) eine Heizeinrichtung (16) eingebaut ist.

9. Kraftfahrzeug nach Anspruch 1, **dadurch gekennzeichnet, dass** in den HWL-Tank (9) ein Füllstandssensor (17) eingebaut ist.

10. Kraftfahrzeuge nach Anspruch 1, **dadurch gekennzeichnet, dass** die HWL-Dosiereinrichtung (6) im Bereich des HWL-Tanks (9) angeordnet ist, dass von dieser HWL-Dosiereinrichtung (6) ein vertikales HWL-Saugrohr (18) in den HWL-Tank (9) hineinragt und bis nahe zu dessen Boden hinunter reicht und dass eine HWL-Dosierfeitung (7) von der Dosiereinrichtung (6) abgeht, die im Eingangsbereich des Hydrolysekatalysators (4) bzw. dessen Gehäuses (4/1) mit einem Sprühkopf (8) endet.

## Claims

1. Motor vehicle, in particular a truck, with an internal-combustion engine that can be supplied with fuel from a fuel tank (1) and in the exhaust-gas line (2) of which engine a hydrolysis catalyst (4), at least one other catalyst (5) and at least one silencer (3) are located, whereby the hydrolysis catalyst (4) can by means of a metering device (6, 7) be charged with a urea-and-water solution (UWS) stored in a UWS tank (9), **characterised in that** the UWS tank (9) fits against one end of the fuel tank (1) by means of an initially pot-shaped UWS tank housing (25), which is open towards the front, into which tank housing (25) a pre-fabricated UWS tank liner (26) can be installed from the front and which tank housing (25) can then be closed up by a front wall (27).

2. Motor vehicle as in Claim 1, **characterised in that** a compact, completely preassembled tank unit (10) consisting of at least the fuel tank (1) and the finished UWS tank (9) can be attached to the chassis frame (11) in place of a fuel tank, the length or volume of which is approximately equal to that of the tank unit (10), whereby within the tank unit (10) the fuel tank (1), although identical in cross-section, has a smaller fuel capacity than the fuel tank which it replaces and the UWS tank (9) is located in the space gained in this way.

3. Motor vehicle as in Claim 1, **characterised in that** the UWS tank (9) is - looking in the direction of forward motion - positioned in series with and before the fuel tank (1).

4. Motor vehicle as in Claim 1, **characterised in that** between the fuel tank (1) and the UWS tank (9) a double wall is positioned which, in the event of leaks, prevents the leaking medium from entering the other section of the tank area.

5. Motor vehicle as in Claim 1, **characterised by** a UWS tank liner (26) pre-fabricated from a thick-walled insulating material.

6. Motor vehicle as in Claim 1, **characterised in that** after installation of the UWS tank liner (26) in the UWS tank housing (25) the UWS tank front wall (27) can be positioned against the front edge of said UWS tank housing (25) and fastened there by creasing over the edge of its circumferential outer wall (29).

7. Motor vehicle as in Claim 1, **characterised in that** the UWS tank (9) has a lining (15) providing it with thermal insulation.

8. Motor vehicle as in Claim 1, **characterised in that** a heating device (16) is installed in the UWS tank (9).

9. Motor vehicle as in Claim 1, **characterised in that** a fluid level sensor (17) is installed in the UWS tank (9).

10. Motor vehicle as in Claim 1, **characterised in that** the UWS metering device (6) is located in the area of the UWS tank (9), that from this UWS metering device (6) a vertical UWS suction pipe (18) extends into the UWS tank (9), almost reaching the bottom of said UWS tank (9), and that a UWS metering line (7) branches off from the metering device (6) and ends as a sprayer (8) in the inlet area of the hydrolysis catalyst (4) or of its housing (4/1).

## Revendications

1. Véhicule à moteur, en particulier un camion avec un moteur à combustion interne qui peut être alimenté en carburant par le biais d'un réservoir à carburant (1) et dans la ligne d'échappement duquel (2) sont disposés un catalyseur à hydrolyse (4), au moins un autre catalyseur (5) et au moins un silencieux (3), auquel cas le catalyseur hydrolyse (4) peut être alimenté en solution à base d'eau et d'urée (HWL) stockée dans un réservoir HWL (9) au moyen d'un dispositif de dosage (6, 7), **caractérisé en ce que** le réservoir HWL (9) est relié, au niveau de la face avant du réservoir à carburant (1), à un carter de réservoir HWL (25) tout d'abord en forme de pot et ouvert vers l'avant, pouvant accueillir un élément intérieur de réservoir HWL (26) à partir de l'avant, et ensuite pouvant être obturé par une paroi frontale (27).

2. Véhicule à moteur selon la revendication 1, **caractérisé en ce qu'**une unité de construction (10) compacte, se composant au moins du réservoir à carburant (1) et du réservoir HWL (9) fini et intégralement prémontée peut être posée sur le cadre du châssis (11) à la place d'un réservoir à carburant dont la longueur de construction ou le volume correspond à celle ou celui de l'unité de construction (10), auquel cas, au sein de l'unité de construction (10), le réservoir à carburant (1) présente, vis-à-vis du réservoir à carburant remplacé, pour une section identique, un volume de réservoir plus petit dans lequel est disposé le réservoir HWL (9) grâce à l'espace de construction gagné.

3. Véhicule à moteur selon la revendication 1, **caractérisé en ce que** le réservoir HWL (9) - vu vers l'avant dans le sens de la marche - est disposé en ligne avec et devant le réservoir à carburant (1).

4. Véhicule à moteur selon la revendication 1, **caractérisé en ce qu'**est disposé entre le réservoir à carburant (1) et le réservoir HWL (9) une double paroi empêchant la pénétration du fluide qui fuit dans l'autre compartiment du réservoir en cas d'une quelconque fuite du réservoir.

5. Véhicule à moteur selon la revendication 1, **caractérisé par** un élément intérieur de réservoir HWL (26) préfabriqué à partir d'un matériau d'isolation d'une épaisseur importante.

6. Véhicule à moteur selon la revendication 1, **caractérisé en ce que**, après le montage de l'élément intérieur du réservoir HWL (26) dans le carter du réservoir HWL (25), la paroi frontale du réservoir HWL (27) peut être montée sur son bord avant et peut être fixée sur le carter du réservoir HWL (25) au moyen d'un bordelage du côté du bord de la paroi extérieure de pourtour (29).

7. Véhicule à moteur selon la revendication 1, **caractérisé en ce que** le réservoir HWL (9) présente un habillage (15) l'isolant thermiquement.

8. Véhicule à moteur selon la revendication 1, **caractérisé en ce qu'**un dispositif de chauffage (16) peut être monté dans le réservoir HWL (9).

9. Véhicule à moteur selon la revendication 1, **caractérisé en ce qu'**un capteur de niveau de remplissage (17) est monté dans le réservoir HWL (9).

10. Véhicule à moteur selon la revendication 1, **caractérisé en ce que** le dispositif de dosage HWL (6) est disposé au niveau du réservoir HWL (9), **en ce qu'**un tuyau d'aspiration HWL vertical dépasse de ce dispositif de dosage HWL (6) et atteint quasiment son fond, et **en ce qu'**une conduite de dosage HWL (7) part du dispositif de dosage (6) et se termine par une tête d'aspersion au niveau de l'entrée du catalyseur à hydrolyse (4) ou de son carter (4/1).
